# EUROPEAN PATENT SPECIFICATION

(11) **EP 3 953 856 B1**
(45) Date of publication and mention of the grant of the patent: **08.04.2026**
(21) Application number: 19729933.2
(22) Date of filing: 25.04.2019
(51) Int. Cl.: G06F 18/21, G06V 20/59, G06V 40/10, G06V 40/16

(54) **RECOMMENDER SYSTEM SELECTING A DRIVER OUT OF MULTIPLE CANDIDATES**
EMPFEHLUNGSDIENST ZUR AUSWAHL EINES FAHRERS AUS MEHREREN KANDIDATEN
SYSTÈME DE RECOMMANDATION SÉLECTIONNANT UN CONDUCTEUR PARMI PLUSIEURS CANDIDATS

(43) Date of publication of application: 16.02.2022
(73) Proprietor: Shenzhen Yinwang Intelligent Technologies Co., Ltd., Shenzhen City, Guangdong 518129 (CN)
(72) Inventor: ZHANG, Di, Plano, Texas 75024 (US); YANG, Lei, Plano, Texas 75024 (US); YU, Hai, Plano, Texas 75024 (US); HUANG, Wei, Plano, Texas 75024 (US)
(74) Representative: Gill Jennings & Every LLP
(86) International application number: PCT/US2019/029168
(87) International publication number: WO 2020/219054

(56) References cited:
- DE-T5- 112020 001 642
- US-A1- 2018 089 605
- US-A1- 2018 182 185
- US-A1- 2019 110 103

## Description

### FIELD

The disclosure generally relates to methods and systems for improving driver safety, and in particular, to methods and systems that identify a preferred candidate to drive a vehicle.

### BACKGROUND

There have been numerous innovations over the years that have improved driver safety. Examples of such innovations include, just to name a few, seatbelts, airbags, safety glass, and crumple zones, which innovations help to protect a driver in the case of a collision. Other types of innovations attempt to reduce the probability of a collision occurring in the first place, such as anti-lock braking systems, and collision avoidance systems, just to name a few. More recently, some vehicle manufacturers have introduced attention assist systems that issue warnings when they detect that a driver is overly tired or otherwise impaired. Despite such innovations, there is still a desire to further improve driver safety by further reducing the probability of a collision occurring.
US2019110103A1 describes that content manipulation uses cognitive states to provide vehicle content recommendations.
US2018089605A1 discloses methods, systems, and machine readable mediums which provide for matching of drivers and passengers in ride sharing systems using automatically determined user contexts.
US2018182185A1 discloses a process of providing a report predicting potential risks relating to an operator driving a vehicle using information obtained from various interior and exterior sensors, vehicle onboard computer ("VOC"), and cloud network.

### BRIEF SUMMARY

According to one aspect of the present disclosure, a method is providing in accordance with appended claim 1.

Optionally, in any of the preceding aspects, the current data for the driver of the vehicle comprises one or more of the following: current image data, current video data, current audio data, current heart rate data, current body temperature data, current driving speed data, or current driving performance data.

Optionally, in any of the preceding aspects, the analyzing the current data and the historical data for the driver of the vehicle and the current data and the historical data for each of the one or more passengers of the vehicle that are potential drivers, includes quantifying one or more of the following for the driver and for each of the one or more passengers of the vehicle that are potential drivers: a mental condition, an emotional condition, a fatigue condition, or an alertness condition.

According to another aspect of the present disclosure, a system is provided is accordance with appended claim 4.

Optionally, in any of the preceding aspects, the historical data for the driver of the vehicle and for each of the one or more passengers of the vehicle that are potential drivers, which historical data is analyzed by the one or more processors, comprises one or more of the following: historical driving record data, historical driving performance data, driving license type data, historical driving period data, or historical rest period data.

Optionally, in any of the preceding aspects, in order to analyze the current data and the historical data for the driver of the vehicle and the current data and the historical data for each of the one or more passengers of the vehicle that are potential drivers, the one or more processors are configured to quantify one or more of the following for the driver and for each of the one or more passengers of the vehicle that are potential drivers: a mental condition, an emotional condition, a fatigue condition, or an alertness condition.

Optionally, in any of the preceding aspects, the one or more sensors include one or more cameras configured to obtain current image data for the driver of the vehicle and current image data for each of the one or more passengers of the vehicle that are potential drivers. The one or more data store interfaces is/are configured to obtain, from one or more data stores, historical image data for the driver of the vehicle and historical image data for each of the one or more passengers of the vehicle that are potential drivers. Further, the one or more processors is/are configured to analyze the current image data and the historical image data for the driver of the vehicle and the current image data and the historical image data for each of the one or more passengers of the vehicle that are potential drivers to thereby identify a preferred candidate to drive the vehicle.

According to another aspect of the present disclosure, a non-transitory computer-readable medium is provided in accordance with appended claim 8.

### BRIEF DESCRIPTION OF THE DRAWINGS

Aspects of the present disclosure are illustrated by way of example and are not limited by the accompanying figures for which like references indicate elements.
FIG. 1. illustrates a driver suggestion system according to an embodiment of the present technology.
FIG. 2 is a block diagram that provides additional details of the driver suggestion system introduced in FIG. 1, in accordance with an embodiment of the present technology.
FIGS. 3A and 3B illustrate a flow diagram that is used to describe methods, according to certain embodiments of the present technology, which can be used to recommend a preferred candidate to drive a vehicle.
FIG. 4 illustrates various types of data which can be provided to the driver suggestion system, introduced in FIG. 1, which data (or subsets thereof) is used by the driver suggestion system to recommend a preferred candidate to drive a vehicle.
FIG. 5 is a flow diagram that is used to describe additional details of one of the steps introduced in FIG. 3A.
FIG. 6 is a flow diagram that is used to describe how rewards and/or feedback can be quantified.
FIG. 7 is a block diagram that is used to describe additional details of how an emotional condition, fatigue condition, mental condition, and alertness condition for can be detected for the driver of a vehicle, and for each of the passengers that are potential drivers.

### DETAILED DESCRIPTION

Embodiments of the present technology relate to methods and systems that analyze current data and historical data for a driver of the vehicle and current data and historical data for each of the one or more passengers of the vehicle that are potential drivers to thereby identify and recommend a preferred candidate to drive the vehicle. Such embodiments can be used to improve the safety of the driver and passenger(s) of the vehicle, as well as the safety of drivers and passengers of other vehicles.

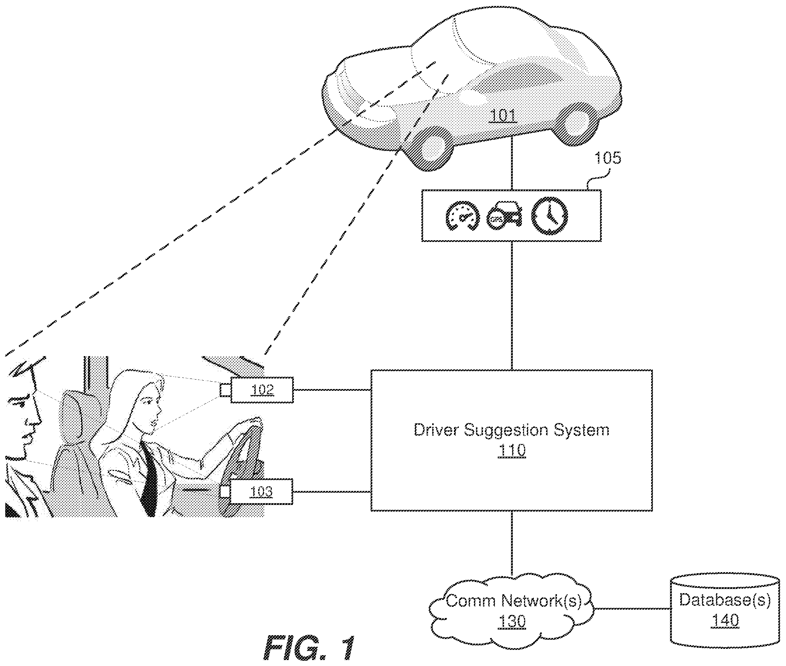

FIG. 1 illustrates a driver suggestion system 110 according to an embodiment of the present technology. The driver suggestion system 110 is shown as being installed or otherwise included within a vehicle 101 that also includes a cabin within which a driver and one or more passengers can sit. The driver suggestion system 110, or one or more portions thereof, can be implemented by an in-cabin computer system, and/or by a mobile computing device, such as, but not limited to, a smartphone, tablet computer, notebook computer, laptop computer, and/or the like.

In accordance with certain embodiments of the present technology, the driver suggestion system 110 obtains, from one or more sensors, current data for a driver of a vehicle and current data for each of the one or more passengers of the vehicle that are potential drivers. The driver suggestion system 110 also obtains, from one or more data stores, historical data for the driver of the vehicle and historical data for each of one or more passengers of the vehicle that are potential drivers. The driver suggestion system 110 analyzes the current data and the historical data for the driver of the vehicle and the current data and the historical data for each of the one or more passengers of the vehicle that are potential drivers to thereby identify a preferred candidate to drive the vehicle. Such analysis is performed using one or more computer implemented neural network and/or some other computer implemented model. Further, the driver suggestion system 110 outputs a recommendation that the preferred candidate drive the vehicle.

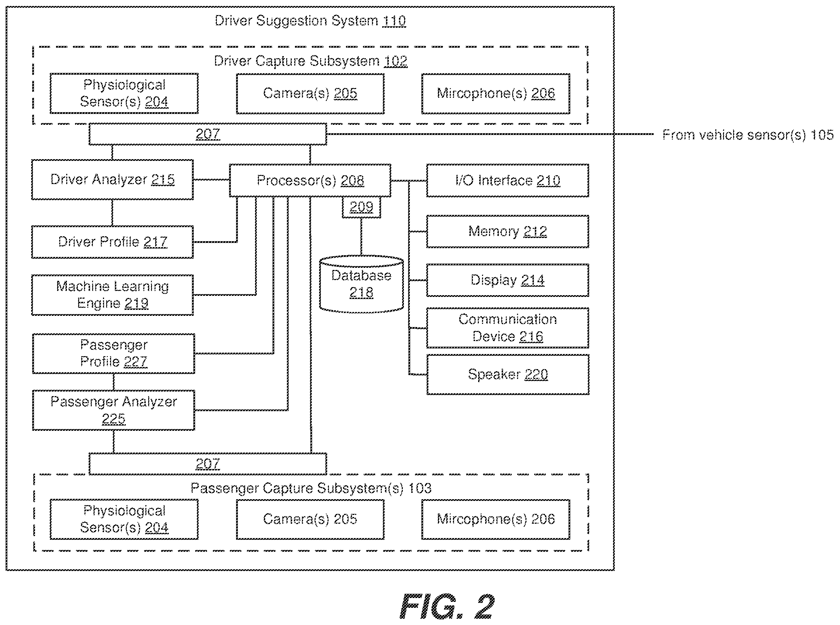

As shown in FIG. 1, the driver suggestion system 110 is communicatively coupled to a driver capture subsystem 102 and a passenger capture subsystem 103. The driver capture subsystem 102 can be used to obtain current data for the driver of the vehicle 101. The passenger capture subsystem 103 can be used to obtain current data for one or more passengers of the vehicle. In other words, the driver capture subsystem 102 and the passenger capture subsystem 103 can include the sensors that are used to obtain current data for the driver of the vehicle and current data for each of the passengers of the vehicle that are potential drivers. As will be described in additional detail below, with reference to FIG. 2, such sensors can include one or more cameras, microphones, and/or physiologic sensors.

While only one passenger capture subsystem 103 is shown in FIG. 1, multiple passenger capture subsystem 103 can be included within the vehicle 101. The driver capture subsystem 102 and the passenger capture subsystem(s) 103 can be external to the driver suggestion system 110, as shown in FIG. 1, or can be included as part of the driver suggestion system 110, depending upon the specific implementation. Additional details of the driver capture subsystem 102 and the passenger capture subsystem(s) 103, according to certain embodiments of the present technology, are described below with reference to FIG. 2.

Still referring to FIG. 1, the driver suggestion system 110 is also shown as being communicatively coupled to various different types of vehicle related sensors 105 that are included within the vehicle 101. Such sensors 105 can include, but are not limited to, a speedometer, a global positioning system (GPS) receiver, and a clock. The driver suggestion system 110 is also shown as being communicatively coupled to one or more communication network(s) 130 that provide access to one or more database(s) 140 and/or other types of data stores. The database(s) 140 and/or other types of data stores can store historical data for the driver of the vehicle, as well as historical data for each of the one or more passengers of the vehicle that are potential drivers. Examples of such historical data include, but are not limited to, historical driving record data, historical driving performance data, driving license type data, historical driving period data, and/or historical rest period data. Such historical data can be stored within a local database or other data store that is located within the vehicle. However, the historical data is more likely stored in one or more database(s) 140 or other data store(s) remotely located relative to the vehicle 101. Accordingly, such database(s) 140 or other data store(s) can be communicatively coupled to the driver suggestion system via one or more communication networks(s) 130.

The communication network(s) 130 can include a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof. The communication network(s) 130 can provide communication capabilities between the driver suggestion system 110 and the database(s) 140 and/or other data stores.

Additional details of the driver suggestion system 110, according to certain embodiments of the present technology, will now be described with reference to FIG. 2. Referring to FIG. 2, the driver suggestion system 110 is shown as including one or more processor(s) 208, an input/output (I/O) interface 210, memory 212, a display 214, and a communication device 216. The driver suggestion system 110 is also shown as including a driver analyzer 215, a driver profile 217, a machine learning engine 219, a passenger analyzer 225, a passenger profile 227, and a database 218. The communication device 216 can, for example, provide for communications between the driver suggestion system 110 and more or more external data stores via one or more communication networks 130. The display 214 can display instructions and/or recommendations to the driver of the vehicle 101, as well as to one or more passengers of the vehicle 101. Additionally, or alternatively, such instructions and/or recommendations can be provided by an audio speaker 220 of the driver suggestion system 110.

While shown as separate blocks in FIG. 2, the driver analyzer 215 and the passenger analyzer 225 can be implemented by one or more processors 208 of the driver suggestion system 110. The driver analyzer 215 can detect and quantify various conditions of the driver of the vehicle 101, including, but not limited to, the driver's mental condition, emotional condition, fatigue condition, and/or alertness condition. Similarly, the passenger analyzer 225 can detect and quantify various conditions of a passenger of the vehicle 101, including, but not limited to, the passenger's mental condition, emotional condition, fatigue condition, and/or alertness condition. Depending upon the specific implementation, the passenger analyzer 225 can perform such analysis of all passengers within the vehicle, or only those one or more passengers that have already been determined to be potential drivers. The driver analyzer 215 can perform its analysis based on current data of the driver of the vehicle and historical data of the driver of the vehicle. Similarly, the passenger analyzer 225 can perform its analysis based on current data of the passenger(s) of the vehicle and historical data of the passenger(s) of the vehicle.

As noted above, the historical data that can be stored for the driver of the vehicle, as well as for each of the passenger(s) of the vehicle that is/are potential driver(s), can include historical driving record data, historical driving performance data, driving license type data, historical driving period data, and/or historical rest period data. The historical driving record data can, for example, be generated and maintained by one or more government agencies that keep track of driver licensing and/or vehicle registrations, and/or by some private agencies or companies. Examples of government agencies that may generate and maintain historical driving record data include a department of motor vehicles, a motor vehicle bureau, a department of public safety, a ministry of transportation, and/or the like. Private insurance companies may also generate and maintain historical driving record data. Historical driving record data can include, for example, information about frequencies and types of moving vehicle infractions for people having a driver's license. Such agencies and/or companies may also generate and maintain driving license type data, which can indicate the specific types of vehicles that individual people are licensed to operate, such as passenger vehicles, commercial vehicles, semi-trailer trucks, and/or the like, as well as the whether the people have a full license or just a learning permit. Such data can also specify whether a person's driver's license is suspended, or has been suspended in the past. Historical driving performance data can specify, for example, how often individual people operate vehicles and how safely they operate vehicles.

Historical driving record data and/or historical driving performance data can be used to predict future driving performance for people. For example, if it is assumed that a first person has been involved in only one collision in the past year, while a second person has been involved in two collisions within the past year, without knowing anything more, it may be deduced that the first person is a safer driver than the second person. However, if it is also known that the first person only drives one hour per week, while the second person drives ten hours per week, then it would be more accurate to deduce that the second person is a safer drive than the first person, since the second person's number of collisions per hour of driving time is substantially less than the first person's number of collisions per hour. Historical driving record data and historical driving performance data can also specify that particular types of driving conditions specific people drive well within, and do not drive well within. These are just a few examples, which are not intended to be all encompassing.

Historical driving period data can indicate how often and for what length of time specific people typically drive per specific period of time (e.g., per day). Additionally, or alternatively, historical driving period data may indicate how recently and/or for what length of time specific people have driven within one or more recent periods of time (e.g., the past hour, the past four hours, the past eight hours, ... the past day, the past two days, etc.). Historical driving period data can be obtained, e.g., from one or more wearable devices (e.g., watches) and/or mobile computing devices (e.g., a smartphone) that people wear and/or carry with them on a normal basis. Historical driving period data can alternatively or additionally be obtained from an in-cabin computer system. In certain embodiments, the driver and/or the passenger(s) may enter historical driving data using the I/O interface 210, e.g., in response to questions presented to the driver and/or passenger(s).

The historical driving record data and/or historical driving performance data can also include information about a driver's years of experience, type of experience, history of traffic accidents, items from an employment personnel record, history of speeding and/or other traffic violations, number, severity, and length of previously identified occurrences of various driver behaviors. As noted above, the driver suggestion system 110 may collect and store a driving profile (e.g., profile 217) for a particular driver or drivers as part of a driver's history. For example, the driver's profile may also include how quickly the driver accelerates or decelerates, usual speeds for particular driving conditions, e.g., night driving, driving in rain or snow, etc., how often the driver swerves or crosses the center line, and the like. The driver history information in one embodiment may be retrieved from an external database, such as a database of the driver's insurance company.

The driving history may also include information regarding one or more driving routes in which the driver of vehicle 101 or drivers of other vehicles have become fatigued while traversing. In some embodiments, the information regarding the one or more driving routes may also include road profiles, road topologies, the number of stops associated with a driving route, the number of turns associated with a driving route, etc.

Historical rest period data can indicate how often and for what length of time specific people typically have slept or otherwise rested per specific period of time (e.g., per day). Additionally, or alternatively, historical rest period data may indicate how recently and/or for what length of time specific people have rested within one or more recent periods of time (e.g., the past hour, the past four hours, the past eight hours, ... the past day, the past two days, etc.). Historical rest period data can be obtained, e.g., from one or more wearable devices (e.g., watches) and/or mobile computing devices (e.g., a smartphone) that people wear and/or carry with them on a normal basis. Historical rest period data can alternatively or additionally be obtained from an in-cabin computer system. In certain embodiments, the driver and/or the passenger(s) may enter historical rest period data using the I/O interface 210, e.g., in response to questions presented to the driver and/or passenger(s).

FIG. 2 also shows additional details of the driver capture subsystem 102 and the passenger capture subsystem(s) 103. Still referring to FIG. 2, the driver capture subsystem 102 is shown as including one or more cameras 205, one or more microphones 206, and one or more physiological sensors 204. Similarly, the passenger capture subsystem(s) 103 is shown as including one or more cameras 205, one or more microphones 206, and one or more physiological sensors 204. As noted above, the driver capture subsystem 102 and the passenger capture subsystem(s) 103 can be external to the driver suggestion system 110, or can be included as part of the driver suggestion system 110, depending upon the specific implementation.

The input/output interface(s) 210 allow information to be presented to a user and/or other components or devices using various input/output devices. Examples of input devices include a keyboard, a microphone, a touch screen (e.g., including capacitive or other sensors that are configured to detect physical touch), a camera (e.g., which may employ visible or non-visible wavelengths such as infrared frequencies to recognize movement as gestures that do not involve touch), and so forth. Examples of output devices include the display device 214, speakers, and so forth. In certain embodiments, the I/O interface 210 receives current driver data and current passenger data from the driver capture subsystem 102 and the passenger capture subsystem(s) 103. The I/O interface 210 can provide an interface between the driver suggestion system 110 of the sensors of the capture subsystems 102 and 103, and/or additional sensor interfaces 207 can be used.

The driver capture subsystem 102 can be used to monitor and identify driver behaviors based on driver data captured using one or more of the camera(s) 205, microphone(s) 206, and/or physiologic sensor(s) 204. In one embodiment, the camera(s) 205 is/are positioned to capture images and motion of the driver's head and face, while in other implementations images and motion of the driver's torso, and/or driver's limbs and hands are also captured. Using such image data, the driver analyzer 215 can monitor driver behavior captured by the camera(s) 205 to detect, e.g., specific facial expressions, eye gaze, eye blinks, and/or body poses, which can include head poses and head nods, and/or the like. One or more of the camera(s) 205 can be an RGB camera, an RGB-D camera, and/or a NIR (Near Infrared) camera that includes an image sensor (e.g., CMOS image sensor) that can be used to capture multiple two dimensional RGB, RGB-D, and/or NIR images per second (e.g., 30 images per second). At least one camera can be a depth camera that produces depth images, e.g., using structured light and/or time-of-flight (TOF) sensors to recreate a 3D structure on point clouds, or the like. These are just a few examples of the types of cameras and images that can be used. The use of other types of cameras and images are also possible and within the scope of the embodiments described herein.

One or more microphone(s) 206 of the driver capture subsystem 102 can be used to capture one or more audio signals of the driver captured by the microphone(s) 206. The audio can be analyzed to detect various features that may vary in dependence on the state of the driver. Examples of such audio features include slurred speech or snoring, which may be indicative of a fatigued or drowsy state of the driver.

The components (e.g., physiologic sensor(s), camera(s), microphone(s), etc.) of the driver capture subsystem 102 can be co-located within a vehicle's cabin, or may be located at different areas of the vehicle's cabin. In another example, individual components of the capture subsystem 102 may be part of another component or device. For example, a camera 205 and a microphone 206 (and also a display 214) may be part of a smartphone or tablet (not shown) placed in the vehicle's cabin, whereas one or more physiologic sensor(s) 204 can be part of a wearable device, and/or located at one or more different locations within the vehicle's cabin. The physiologic sensor(s) 204 can include, but are not limited to, a heart rate sensor, a body temperature sensor, a blood pressure sensor, and/or the like. One or more such sensors can be incorporated into the driver's seat.

Similarly, the components (e.g., physiologic sensor(s), camera(s), microphone(s), etc.) of the passenger capture subsystem 103 can be co-located within a vehicle's cabin, or may be located at different areas of the vehicle's cabin. Further, individual components of the capture subsystem 103 may be part of another component or device. There can be a separate passenger capture subsystem 103 for each passenger, or one subsystem 103 can be used for multiple passengers. It would also be possible that certain components (e.g., a microphone and/or a camera) be shared by the driver capture subsystem 102 and the passenger capture subsystem 103, and/or shared among multiple passenger capture subsystems 103.

The driver analyzer 215 may be associated with a driver profile 217, which models driver behavior and is explained further below, and together may detect one or more attributes that are indicative of the manner in which a driver of the vehicle 101 behaves. Driver behaviors may include, for example, the driver's normal blink rate, gaze direction, head, limb and/or torso position and/or other driver movement and activity or driver sound or audio. When a driver's behavior deviates substantially from a profile 217, it may be an indication of erratic or unusual driver behavior that implies the safety of the vehicle, and its occupants, are at an increased risk. For example, a fast blink rate or awkward gaze direction may demonstrate that the driver is fatigued. In another example, snoring or slurred speech may be indicative of a driver about to fall or having fallen asleep at the wheel. As explained further below, assessing driver behavior in real-time in conjunction with historical and current data or information, enables the system 110 to provide real-time feedback (e.g., a recommendation that a passenger take over driving) in response to detecting unwanted driver behavior.

In certain embodiments, the driver's behavior may be compared to a personal profile or a pooled group of driver profiles or to a "threshold" profile each of which may act as a baseline for the comparison. The comparison may be used to determine whether a particular driver's actions (e.g., facial expression, motion and/or sound) constitutes acceptable (e.g., fatigue not or likely not an issue) or unacceptable (e.g., fatigue likely or is an issue) driver behavior. For example, an algorithm may be employed to determine whether the eye closures of a driver captured by the capture subsystem 102 is more likely associated with acceptable (e.g., eyes are open and blinking at a specified threshold of behavior) or unacceptable (e.g., eyes remain closed for longer than threshold level of behavior) driver behavior.

While driver image, motion and/or audio may be captured for analysis to identify driver behaviors, additional information may also be captured and collected. Additional information may include, but is not limited to, a driver's heart rate, body temperature, and/or blood pressure, but is not limited thereto. Historical data for the driver of the vehicle can also be accessed and used to determine whether the driver's behavior is normal or abnormal. The identified behaviors may be used to generate an initial or baseline driver profile as well as to generate historical profiles in which data is collected over a predetermined period of time. In one embodiment, additional information includes the context or environment within which the driver is currently driving the vehicle 101. For example, context or environment as it applies to driving a vehicle may be defined as a set of current conditions in which the driver is operating. Such conditions may include the length of time that the driver has been on the road (e.g., current hours of driving), length of time since the driver last slept, weather conditions, temperature, heading direction, position of the sun, road conditions, date and time of day/night, traffic conditions, and/or any other current conditions that relate to and/or can influence driver behavior, including a historical collection of any of the afore-mentioned conditions. This information may be collected for the driver of the vehicle, as well as for one or more passenger(s) that is/are potential drivers.

In some embodiments, the detected driver behaviors are behaviors related to fatigue or drowsiness or falling asleep. These driver behaviors can be indicated by movements such as excessive yawning, blinking, and/or head nodding. In some embodiments, the driver behaviors are active behaviors (in contrast to fatigue-related behaviors), such as texting, emailing, using a cell phone or tablet, eating, reading, talking, etc. For example, movements/positions consistent with driver interaction with a device may be demonstrated by the driver gaze directions, eye and/or retina movements, e.g., back and forth from road to device, finger/hand movements consistent with touch or keypad interaction, head rotations, e.g., alternately toward road and toward a device, etc.

In certain embodiments, the driver analyzer 215 may comprise hardware running software and/or firmware configured to implement driver behavior detection. In some embodiments, the driver analyzer 215 may be implemented as part of an onboard computer of a vehicle (not shown) or processor(s) 208. In other embodiments, the captured driver image and related audio data and optionally at least some of the additional information is transmitted from the vehicle to an external computer or processor via a network (not shown). In some embodiments, some portions of driver behavior detection, such as motion detection, image processing, and/or behavior recognition, classification, and detection, may be implemented by the driver behavior analyzer 215 in the vehicle 101, whereas other portions of the driver analyzer such as analysis of the processed data may be implemented by an external processor via a network.

Input/output interface(s) 210 allow information to be presented to a driver and/or one or more passenger's that are potential drivers. Examples of input devices include a keyboard, a microphone, a touch screen (e.g., including capacitive or other sensors that are configured to detect physical touch), a camera (e.g., which may employ visible or non-visible wavelengths such as infrared frequencies to recognize movement as gestures that do not involve touch), and so forth. Examples of output devices include one or more display device 214, speaker 220, and/or so forth.

In certain embodiments, the I/O interface 210 is used by the driver to identify themselves to the driver suggestion system 110, to thereby enable the driver suggestion system 110 to obtain historical data for the driver. Alternatively, the driver suggestion system 110 can use facial recognition technology, or the like, to identify the driver to thereby enable the driver suggestion system 110 to obtain historical data for the driver. More specifically, one or more camera(s) 205 can be used to obtain image data for the driver, and such image data can be compared to image data stored in a database, or the like, to identify the driver.

The I/O interface 210 can also be used by one or more passengers of the vehicle to identify themselves to the driver suggestion system 110, to thereby enable the driver suggestion system 110 to obtain historical data for the passenger(s), as well as to determine whether the passenger(s) is/are potential drivers. The passenger(s) or the driver can use the I/O interface 210 to specify which passenger(s) is/are potential drivers. Facial recognition technology, or the like, can be used to identify the passenger(s) in the vehicle to thereby enable the driver suggestion system 110 to determine whether they is/are potential drivers and to obtain historical data for the passenger(s). More specifically, one or more camera(s) 205 can be used to obtain image data for each passenger, and such image data can be compared to image data stored in a database, or the like, to identify the passenger. Once a passenger is identified using image data, and/or by inputs entered by the driver or passenger, the driver suggestion system 110 can determine whether or not the passenger is a potential driver. Such a determination can be based on whether the passenger has an appropriate valid license to operate the vehicle in which they are located. In certain embodiments, the driver and/or passenger(s) can use the I/O interface 210 to specify which one or more passenger(s) is/are potential drivers. There can also be an option for allowing one or more passengers to opt out of being considered a potential driver.

In certain embodiments, the I/O interface 210 (and/or interfaces 207) receives current data for the driver of the vehicle, which can include, for example, current image data, current video data, current heart rate data, current body temperature data, current driving speed data, and/or current driving performance data, but is not limited thereto. The current image and/or video data can be obtained from one or more camera(s) 205 of the driver capture subsystem 102. The current heart rate data and the current body temperature data can be obtained from one or more physiologic sensor(s) 204 of the driver capture subsystem 102. Such physiologic sensor(s) 204 can be included in a wearable device (e.g., a wrist worn device) that can wirelessly communicate with the driver suggestion system 110. It is also possible that such physiologic sensor(s) 204 are built into the vehicle, e.g., within the driver's seat.

Similarly, in certain embodiments, the I/O interface 210 (and/or interface(s) 207) receives current data for the one or more passengers of the vehicle, which data can include, for example, current image data, current video data, current heart rate data, current body temperature data, current driving speed data, and/or current driving performance data, but is not limited thereto. The current image and/or video data can be obtained from one or more camera(s) 205 of the passenger capture subsystem 103. The current heart rate data and the current body temperature data for each of the passengers can be obtained from one or more physiologic sensor(s) 204 of the passenger capture subsystem 103. Such physiologic sensor(s) 204 can be included in devices worn by passengers (e.g., wrist worn devices) that can wirelessly communicate with the driver suggestion system 110. It is also possible that such physiologic sensor(s) 204 are built into the vehicle, e.g., within the passenger seats. The I/O interface 210, communication device 216, and/or interface 209, can provide one or more data store interfaces that obtain, from one or more data stores, historical data for the driver of the vehicle and historical data for each of the one or more passengers of the vehicle that are potential drivers.

While shown as a separate blocks in FIG. 2, the driver analyzer 215 and the passenger analyzer 225 can be implemented by the one or more processors 208 of the driver suggestion system 110. In certain embodiments, the driver analyzer 215, or more specifically the processor(s) 208, extract and measure eye closures of the driver, and can determine an eye closure ratio of the driver in a time period using the one or more eye closure measurements and the driver profile 217. The eye closure ratio can indicate a ratio of eye closure of the driver as measured in the current time period with eye closure of the driver retrieved from the profile 217 of the driver during a baseline state. The eye closure ratio may then be normalized and a percentage eye closure value may be determined by the processor(s) 208, and the process may be reiterated over a period of time. The measurements may then be compared to stored values, for example, in the profile 217 of the driver to determine whether the measured eye closures is indicative of a fatigued or drowsy state of the driver of the vehicle 101. In one embodiment, the processor(s) 208 continues to take measurements until the vehicle is turned off or the driver otherwise completes driving, for example by exiting the vehicle 101.

Data collected by the driver capture subsystem 102 and the passenger capture subsystem 103 may be stored in database 218, in memory 212 or any combination thereof. In one embodiment, the data collected is from one or more sources external to the vehicle 101. The stored information for the driver may be data related to driver behavior and safety, such as information captured by capture subsystem 103. In one embodiment, the data stored in database 218 may be a collection of data collected for vehicle 101 and/or other vehicles. In one example, the collected data may provide current data that is collected in real-time and may include current profile data and other data relevant and useful for driver behavior and safety. In one other embodiment, the collected data may provide historical data or information such as driving history, driver fatigue data, historical profile data and other data relevant and useful for driver behavior and safety that is collected in the past and/or over a period of time. The driving history may be included as part of the stored profile 217 in one embodiment. In another embodiment, the collected data may be current data of one or more drivers currently driving on a particular route or in a geographical region that provides a real-time indication of collected data.

In certain embodiments, the memory 212 can store instructions executable by the processor(s) 208, the machine learning engine 219, and programs or applications (not shown) that are loadable and executable by processor(s) 208. The machine learning engine 219 can comprise executable code stored in memory 212 that is executable by processor(s) 208 and selects one or more machine learning models, such as behavior models, stored in the memory 212 (or database 218). The behavior models may be developed based on acceptable and unacceptable driver behaviors (e.g., driver body positions), as well as using the current and historical data collected from the vehicle 101 and/or other vehicles, along with any other information related to driver behavior or history. A model of acceptable and unacceptable driver behaviors, such as driver body positions, can be developed using well known and conventional machine learning and deep learning techniques, such as implementation of a convolutional neural network (CNN), described in more detail below.

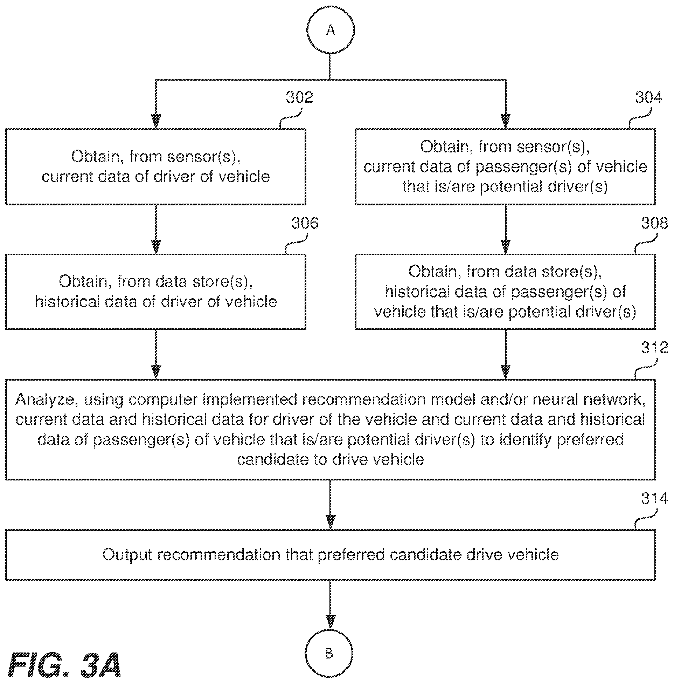

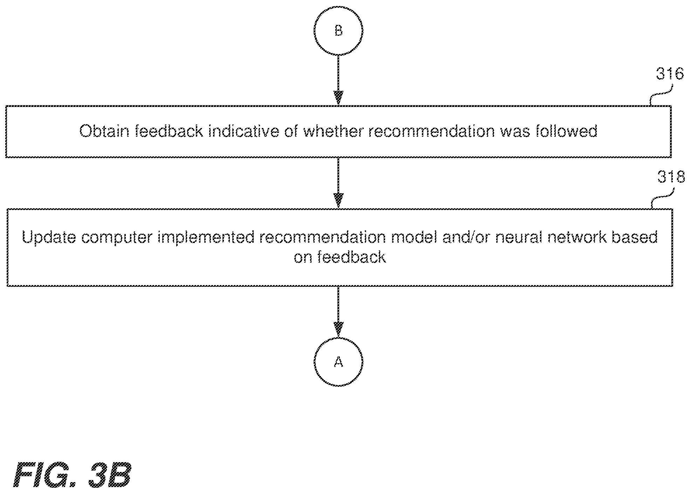

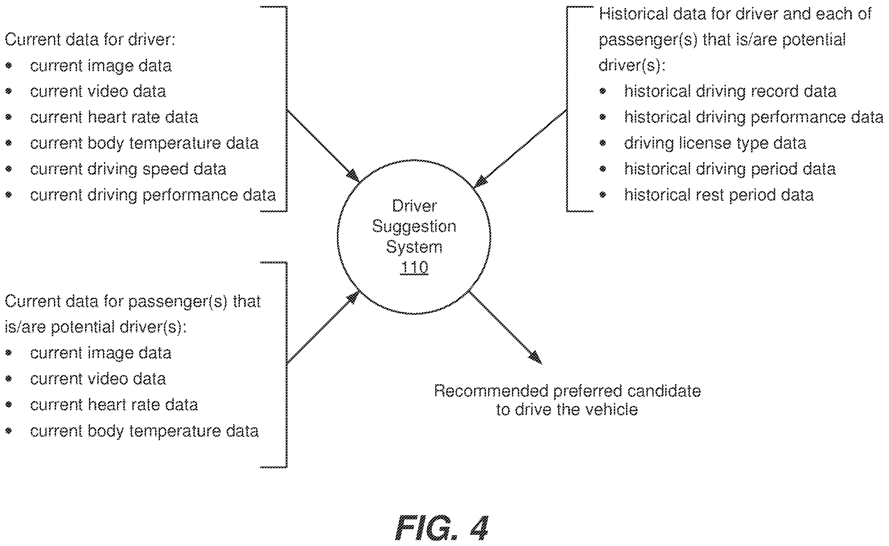

FIGS. 3A and 3B illustrate a flow diagram that is used to describe methods, according to certain embodiments of the present technology, which can be used to recommend a preferred candidate to drive a vehicle, e.g., the vehicle 101. Referring to FIG. 3A, step 302 involves obtaining current data for the driver of the vehicle, and step 304 involves obtaining current data for one or more passenger(s) of the vehicle that is/are potential driver(s). As shown in FIG. 3A, steps 302 and 304 can be performed in parallel. Alternatively, such steps can be performed serially, i.e., one after the other, e.g., step 302 can be performed before step 304, or vice versa. Still referring to FIG. 3A, step 306 involves obtaining historical data for the driver of the vehicle, and step 308 involves obtaining historical data for one or more passenger(s) of the vehicle that is/are potential driver(s). As shown in FIG. 3A, steps 306 and 308 can be performed in parallel. Alternatively, such steps can be performed serially, i.e., one after the other, e.g., step 306 can be performed before step 308, or vice versa. It would also be possible to reverse the order of steps 302 and 306, and reverse the order of steps 304 and 308. Exemplary types of current data and historical data that could be obtained for the driver and the passenger(s) were discussed above, and are also discussed in more detail below, e.g., with reference to FIG. 4.

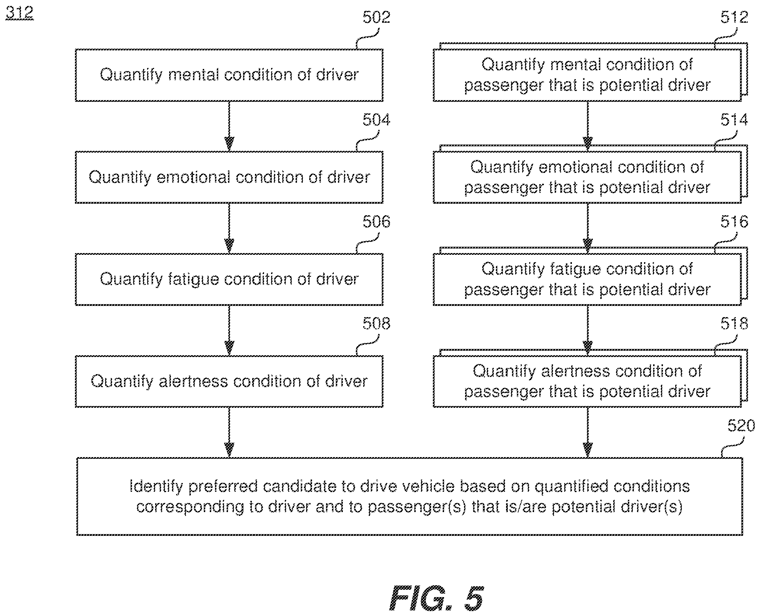

Still referring to FIG. 3A, step 312 involves analyzing the current data and the historical data for the driver of the vehicle and the current data and the historical data for each of the passenger(s) of the vehicle that is/are potential driver(s) to thereby identify a preferred candidate to drive the vehicle. In accordance with certain embodiments, the analyzing is performed using a computer implemented neural network and/or some other type of computer implemented model. Additional details of how step 312 can be performed, according to certain embodiments of the present technology, are discussed below with reference to FIG. 5. After a preferred candidate to drive the vehicle has been identified, at step 312, step 314 involves outputting a recommendation that the preferred candidate drive the vehicle. Referring back to FIG. 2, the recommendation can be output via the display 214 and/or the speaker 220. In certain embodiments, the recommendation can generally state that it is recommended that a specific passenger take over driving the vehicle. In other embodiments, the reason for the recommendation can be stated. For example, the recommendation may state that it is recommended a specific passenger take over driving the vehicle because the driver appears to very fatigued and/or distracted, and the specific passenger appears to be well rested and attentive. For a more specific example, an audio output may be provided to the driver saying "you seemed tire, it would be safer if the person sitting in the passenger seat take over driving." Additionally, or alternatively, an audio output may be provided to one of the passengers saying "the driver is tired, and you seem to be the best person to drive now, would you like to make the switch?". These are just a few examples of the types of outputs that may occur at step 314. It may also be possible that there is no good candidate for driving the vehicle, in which case the system may simply recommend that the driver of the vehicle find a rest stop so that the people in the vehicle can rest, or the like.

In accordance with certain embodiments, if it is determined that it is safe for the current driver to continue driving (e.g., if the results of the quantification exceeds some specified threshold), then there will be not suggesting that one of the passengers take over the driving, even if results of the analysis indicate that the passenger is likely to be a safer driver. In other words, results of the analysis at step 312 can be labeled as positive or negative for the driver and each of the passengers, e.g., based on comparisons to a threshold. If the driver's result is positive, the driver suggestion system 110 can suggest that the driver continue driving, or simply not provide any recommendation, since the status quo should be continued. However, if the driver's result is not positive and there exists a positive result for one or more passengers, then the driver suggestion system 110 can suggest that one of the passengers take over driving. Otherwise, the driver suggestion system 110 can suggest all occupants of the vehicle have a rest.

Referring now to the flow diagram in FIG. 3B, which is a continuation of the flow diagram in FIG. 3A, step 316 involves obtaining feedback data indicative of whether the recommendation (output at step 314) was followed, and step 318 involves updating the computer implemented neural network and/or some other type of computer implemented model (used to perform the analysis at step 312) based on the feedback data. The feedback can simply specify whether the recommendation, which was output at step 314, was followed. The feedback can be entered by the driver or a passenger via that I/O interface 210. Alternatively, the driver capture subsystem 102 can capture image data indicative of whether the driver of the vehicle has been replaced with one of the passengers, such that there is a new driver of the vehicle.

If the recommendation output at step 314 was that a specific passenger take over driving the vehicle 101, the feedback obtained at step 316 can indicate whether or not the specific passenger took over driving the vehicle. Where a recommendation was followed, the driver suggestion system 110 can deduce that its recommendation was accurate and that the driver and specific passenger are the type of people that are likely to follow such a recommendation. Where a recommendation was not followed, the driver suggestion system 110 can deduce that its recommendation may not have been accurate and/or that the driver and specific passenger are the type of people that are likely not to follow such a recommendation in the future. Where a recommendation is not followed, the driver suggestion system 110 can present one or more questions to the driver and/or the specific passenger (that was identified as the preferred passenger to drive the vehicle), e.g., via the display 214, to receive specific feedback regarding why the recommendation was not followed. Such reasons can include, for example, that the driver believes they are fine to drive, and/or that the specific passenger does not want to drive this particular vehicle and/or other specific reason(s). Such feedback information can be used to update the historical data that is stored for the driver and the specific passenger. Such feedback information, as noted above, can also be used to update the model(s) that perform that analysis at step 312, thereby potentially changing how such analysis is performed in the future.

FIG. 4 illustrates various types of data which can be provided to (and thus obtained by) the driver suggestion system 110, introduced in FIG. 1, which data (or portions thereof) is used by the driver suggestion system 110 to recommend a preferred candidate to drive a vehicle. As shown in FIG. 4, and mentioned above, such data can include current data for the driver, current data from one or more passengers that is/are potential drivers, and historical data for the driver and each of the passenger(s) that is/are potential drivers. As noted above, the current data for the driver can include, but is not limited to, current image data, current video data, current audio data, current heart rate data, current body temperature data, current driving speed data, and/or current driving performance data. The current data for each of one or more passengers can include similar types of data, but may not include current driving speed data and current driving performance data, since the passenger(s) is/are not currently driving the vehicle. The historical data for the driver and each the passenger(s) can include, e.g., historical driving record data, historical driving performance data, driving license type data, historical driving period data, historical rest period data, and/or the like, as noted above.

Additional details of the analysis performed at step 312, introduced above with reference to FIG. 3A, in accordance with certain embodiments of the present technology, will now be described with reference to FIG. 5. The analysis of the driver is shown along the left in FIG. 5, in no particular order, and can include quantifying a mental condition of the driver at step 502, quantifying an emotional condition of the driver at step 504, quantifying a fatigue condition of the driver at step 506, and quantifying an alertness of the driver at step 508. Similarly conditions can also be quantified for one or more passengers at instances of steps 512, 514, 516, and 518, shown along the right in FIG. 5, in no particular order. The mental condition of each of the driver and one or more passengers can indicate, for example, whether they are sane or insane, but is not limited thereto. The emotional condition of each of the driver and one or more passengers can indicate, for example, whether they are angry or happy, but is not limited thereto. The fatigue condition of each of the driver and one or more passengers can indicate, for example, whether they are tired or wide awake, but is not limited thereto. The alertness condition for each of the driver and the one or more passengers can indicate, for example, whether they are distracted or engaged, but is not limited thereto. Other types of conditions that may be quantified for the driver and the passenger(s) can also be physical health, e.g., whether they are healthy or ill. The quantifications that are performed at steps 502 through 508, and 512 through 518, can assign a first value (e.g., the value 1) to conditions that are conducive to safe driving, and can assign a second value (e.g., the value -1) to conditions that are not-conducive to safe driving. In other words, the quantifications can be binary. Alternatively, the quantifications can have more granularity that simply being binary, by having more than two possible values for each condition that is quantified.

Still referring to FIG. 5, step 520 involves identifying the preferred candidate based on the quantified conditions corresponding to the driver and to the passenger(s) that is/are potential drivers. In accordance with certain embodiments, step 520 can involve summing the quantified values determined at steps 502 through 508 and instances of steps 512 through 518 (that are performed for each passenger that is a potential driver), and identifying which person (driver or passenger) corresponds to the greatest resulting sum. When performing the summing, the various conditions can be weighed equally. Alternatively, certain conditions can be weighed differently than others. For example, the fatigue condition can be weighted the highest, while another one of the conditions may be weighted the lowest. Other variations are also possible and within the scope of the embodiments described herein.

In accordance with certain embodiments, driver and passenger conditions are quantified using quantized information vectors. Suppose ***X_{pd,m}*** is the information vector of a potential driver m, ***F_{pd,m}*** is the feedback of the potential driver m, and ***y_{pd,m}*** is the result of potential driver m, then: ***y_{pd,m}** = f*(***X_{pd, m}, F_{pd,m}***)*.* Similarly, suppose ***X_{d}*** is the information vector of the driver, *F_{d}* is the feedback of the driver, and ***y_{d}*** is the result of the driver, then: ***y_{d}** = f*(***X_{d}***, ***F_{d}***). If ***y_{d}*** > **0**, the driver suggestion system 110 can suggest that the driver continue driving. If ***y_{d}*** < **0**, the driver suggestion system 110 can suggest it is time to change drivers. When it happens, if there exists ***y_{pd,m}** >* **0** , the system suggests the passenger with the highest states value is the preferred candidate to drive the vehicle. If there doesn't exist ***y_{pd,m}** >* **0** , the system suggests all the people find a parking lot or rest stop and have a rest. Various machine learning methods can be used to implement this function, such as Logistic Regression, Support Vector Machine, Neural Network or Hidden Markov Model. In certain embodiments, the driver's result and each potential driver's result can be determined separately.

In accordance with certain embodiments, to increase a probability of the driver and passenger(s) following a recommendation, rewards can be provided to the driver and/or one or more passenger(s) whenever a recommendation is followed. Such rewards can be coupons to certain companies, cashback rewards, a vehicle insurance premium reduction, and/or the like.

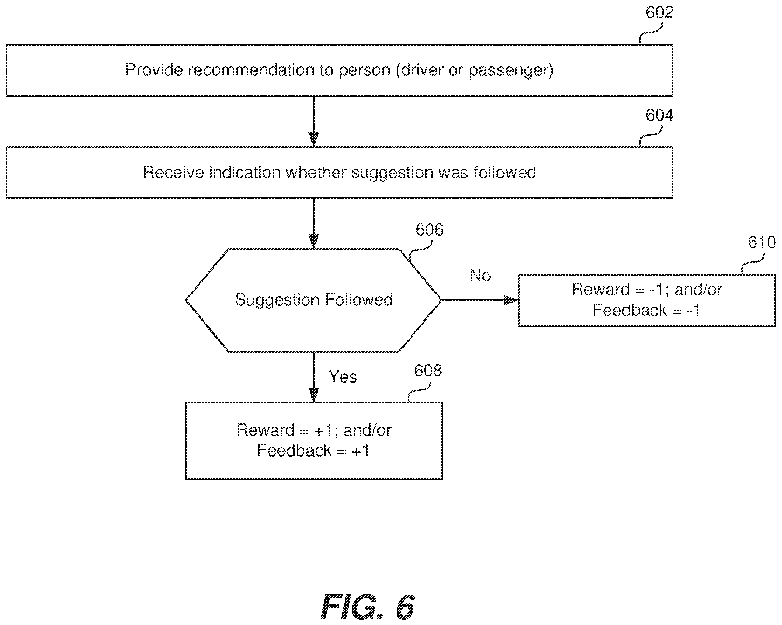

FIG. 6 is a flow diagram that is used to describe how rewards and/or feedback can be quantified. At step 602, which can be the same as step 314, a recommendation is provided to the driver. At separate instances of step 602, recommendation(s) can also be provided to one or more passengers. At instances of step 604, indications of whether the recommendation was followed is received. At step 606 there is a determination of whether the recommendation was followed. If the recommendation was followed, then at step 608 there can be in increase in the reward provided to the person that followed the recommendation. Alternatively, or additionally, at step 608 positive feedback can be provided to the driver suggestion system 110, indicating that the particular recommendation was followed and thus is likely to again be followed in the future by a particular person. If the recommendation was not followed, then at step 610 there can be a decrease in the reward provided to the person that did not follow the recommendation. Alternatively, or additionally, at step 610 negative feedback can be provided to the driver suggestion system 110, indicating that the particular recommendation was not followed and thus is likely to again not to be followed in the future by a particular person.

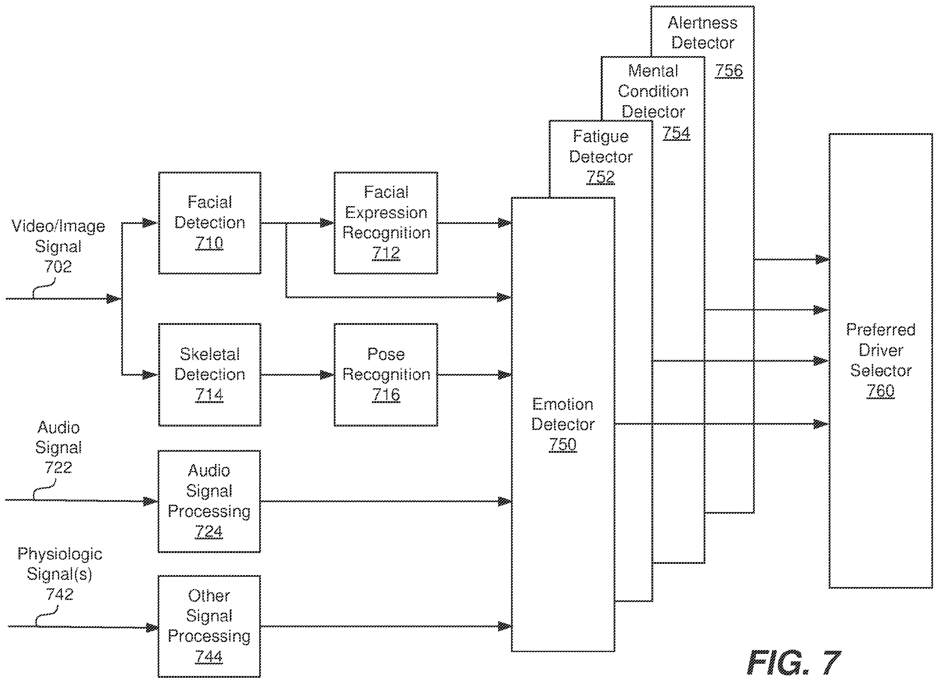

FIG. 7 is a block diagram that is used to describe additional details of how the emotional condition, fatigue condition, mental condition, and alertness condition for people (e.g., the driver, and each of the passengers that are potential drivers) can be detected. The blocks in FIG. 7 can be parts of the driver analyzer 215 and/or passenger analyzer 225 introduced in FIG. 2. More generally, the blocks in FIG. 7 can be parts of the driver suggestion system 110.

Referring to FIG. 7, shown therein is a facial detection block 710 (also referred to as a facial detector 710) and a facial expression recognition block 712 (also referred to as a facial expression recognizer 712). Also shown in FIG. 7 is a skeletal detection block 714 (also referred to as a skeletal detector 714) and a pose recognition block 716 (also referred to as a pose recognizer 716). As shown in FIG. 7, the facial detector 710 and the skeletal detector 714 are shown as receiving a video signal 702. The video signal 702 can be, e.g., a video signal of the driver (or a passenger) received from a camera 205 of the driver capture subsystem 102 (or the passenger capture subsystem 103). Also shown in FIG. 7 is an audio signal processing block 724 (also referred to as an audio signal processor 724 or an audio signal analyzer 724) and another signal processing block 744. The audio signal 722 can be, e.g., an audio signal of the of the driver (or a passenger) received from a microphone 206 of the driver capture subsystem 102 (or the passenger capture subsystem 103).

In accordance with certain embodiments, the facial detector 710 can detect a person's face within an image, and can also detect facial features within the image. Already developed (or future developed) computer vision techniques can be used by the facial detector 710 to detect such facial features. For an example, the HSV (Hue-Saturation-Value) color model or some other computer vision technique can be used to detect a face within an image. A feature detection model or some other computer vision technique can be used to identify facial features, such as, but not limited to, eyes, nose, lips, chin, cheeks, eyebrows, forehead, and/or the like. Feature detection can also be used to detect wrinkles in specific facial regions, such as on the forehead, on the sides of the mouth, and/or around the eyes. In certain embodiments, a person's face and their facial features can be identified using bounding boxes. Some features to be identified can be contained within other features, such as eyes on a user's face, in which case successive bounding boxes may be used to first identify the containing feature (e.g., a face) and then to identify the contained feature (e.g., each eye of a pair of eyes). In other embodiments, a single bounding box may be used to identify each distinct feature. In certain embodiments, one or more algorithm libraries, such as the OpenCV (http://opencv.willowgarage.com/wikil) computer vision library and/or the Dlib algorithm library (http://dlib.net/), can be used to identify these facial features and to generate bounding boxes. In certain embodiments, a bounding box need not be rectangular, but rather, can be another shape, such as but not limited an elliptical. In certain embodiments, a machine learning technique, such as boosting, may be used to increase a confidence level in the detection of facial features (e.g., eyes, nose, lips, etc.). More generally, data sets can be used to train a deep neural network (DNN) and/or other computer model to detect facial features from images, and the trained DNN and/or other computer model can be thereafter used for facial feature recognition.

Once facial features have been identified (also referred to as detected) by the facial detector 710, the facial expression recognizer 712 can determine a person's facial expression. Generally, a human face consists of different parts such as a chin, a mouth, eyes and a nose, as noted above. Shape, structure and size of those facial features can vary with different facial expressions. Additionally, with certain facial expressions, wrinkles in specific facial locations may change. For example, the shape of person's eyes and mouth can be employed to distinguish between different facial expressions, as can the wrinkles on a person's forehead, and/or the like. Based at least in part on the detected facial expressions of a person.

The skeletal detector 714 can use a skeletal detection model or some other computer vision technique to identify human body parts and joints, such as, but not limited to, arms, hands, elbows, wrists, and/or the like. The pose recognizer 716 can detect specific poses, such as whether a person is holding a steering wheel of a vehicle with both of their hands while driving a vehicle, or whether the person has one of their arms raised with their hand in a fist while driving a vehicle. Data sets can be used to train a deep neural network (DNN) and/or other computer model to detect human poses from images, and the trained DNN and/or other computer model can be thereafter used for pose recognition.

Once human body parts are detected within an image by the skeletal detector 714, the pose recognizer 716 can determine a person's pose. Generally, a human body consists of different parts such as a head, neck, torso, upper arms, elbows, forearms, wrists, hands, etc. With certain poses, the overall and relative locations and orientations of such body parts may change. For example, while a person is driving a vehicle, that person will often have both of their hands on the steering wheel of the vehicle, but may raise one of their arms and make a fist if the person becomes angry, e.g., because a driver of another vehicle caused the person to stop short, swerve, and/or the like.

As noted above, in FIG. 7 the audio signal analyzer 724 receives an audio signal 722. The audio signal 722 can be, e.g., an audio signal of the driver (or a passenger). The audio signal analyzer 724 can analyze the audio signal 722 to detect various features of the audio signal 722 that may vary in dependence on the emotional state, fatigue, mental condition and/or alertness of a person. Examples of such audio features include pitch, vibrato, and inflection. Pitch relates for the frequency of a signal, and thus, can be quantified as a frequency. Changes in the pitch of a person's voice is often correlated with an arousal state, or more generally an emotional state, of the person. For example, increases in pitch often correlate with highly aroused states such as anger, joy, or fear, while decreases in pitch often correlate with low arousal states such as sadness or calmness. Vibrato is a periodic modulation of the pitch (e.g., fundamental frequency) of a person's voice, occurring with a given rate and depth. Vibrato also relates to jitter, and it often correlates with changes in emotion. Increased fluctuations in pitch, and thus vibrato, can, e.g., be indicative of increases in happiness, distress, or fear. Inflection is a rapid modification of the pitch at the start of each utterance, which overshoots its target by several semitones but quickly decays to the normal value. The use of inflection leads to increased variation in pitch, which is associated with high emotional intensity and positive valence.

Outputs from the facial detector 710, facial expression recognizer 710, pose recognizer 716, and audio signal processor 724 can be provided to an emotion detector 750, a fatigue detector 752, a mental condition detector 754, and an alertness detector 756, each of which can be implemented using one or more processors (e.g., 108). The detectors 750, 752, 754, and 756 can also receive one or more physiologic signals 742, after such signal(s) are optionally processed by the signal processor(s) 744. Such physiologic signals may provide information about heart rate, body temperature, blood pressure, and/or the like, as noted above. One or more deep neural network (DNN) and/or other computer model can be trained with such physiologic information to determine how such information and/or changes therein correlate to emotion, fatigue, mental condition, and/or alertness.

Each of the detectors 750, 752, 754, and 756 can use one or more look up tables (LUTs) to quantify the emotional, fatigue, mental, and alertness condition of the person being analyzed. Additionally, physiologic signals 742 can be provide to such detectors from one or more physiological sensors 204, examples of which were discussed above, and such signals may be processed by signal processor(s) 744 before being provided to one or more of the detectors 750, 752, 754, and 756. The output of the facial expression analyzer 712 can specify one or more facial expression features of the person determined based on a video signal 702 of the person, the output of the pose recognizer 716 can specify one or more body poses of the person determined based on the video signal 702 of the person, and the output of the audio signal analyzer 724 specify one or more audio features determined based on the audio signal 722. Instead of, or in additional to using LUTs, one or more of the detectors 750, 752, 754, and 756 can be implemented by one or more deep neural network (DNN) and/or one or more other computer models that is/are trained based on training data, which can include facial expression training data, body pose training data, speech training data, and/or other training data. One or more of the detectors 750, 752, 754, and 756 can analyze the blinking, gaze, head pose, hand pose, vocal features, and/or the like of the driver (and one or more passengers) to quantify the person's emotional condition, fatigue condition, mental condition, and alertness condition, respectively.

Outputs of the various detectors 750, 752, 754, and 756 are shown as being provided to a preferred driver selector 760. The preferred driver selector 760 can be implemented using one or more processors (e.g., 108) that implement a DNN and/or one or more computer models that is/are used to identify a preferred driver based on the various conditional detected by the various detectors 750, 752, 754, and 756.

Sometimes, argument about who should or should not drive a vehicle happen in the middle of the relaxing and pleasing road trip. This may result in quarreling between friends and/or family members and may cause a car accident. Embodiments of the present technology can be used to avoid such arguments, e.g., if the people agree to follow the recommendations produced by a system described herein before such people embark on the road trip. Further, if a driver and all the passengers are sleepy or otherwise not in the appropriate condition to drive, a system described herein can recommend that all of the people within the vehicle take a rest, avoiding the need for one of the people to pretend that they are able to take on the responsibility of being the driver.

Embodiments of the present technology may be especially useful for use when people that do not know one another agree to share a rental vehicle. For example, suppose there is an application and/or service which arranges strangers to rent one car together and all of them are valid drivers. In such a situation, the strangers would not know the driving abilities of one another. Embodiments of the present technology can be used to determine who should initially drive the rented vehicle, as well as when one of the passenger(s) should take over the driving. With such embodiments, driver selection can be performed smoothly in a manner in which everyone is satisfied, avoiding the awkwardness of the people needed to decide for themselves who should drive and for how long.

Embodiments of the present technology can also be used to pair up a group truck drivers, or the like, by using driving history to pair drivers that have a similar or complimentary ability and energy. For example, if certain long distance truck drivers have experience driving during daylight, while others have experience driving at night, embodiments of the present technology can be used to pair up such driver and/or recommend when the one of the truck drivers should perform the driving, while the other rests, and vice versa.

Certain embodiments of the present technology described herein can be implemented using hardware, software, or a combination of both hardware and software. The software used is stored on one or more of the processor readable storage devices described above to program one or more of the processors to perform the functions described herein. The processor readable storage devices can include computer readable media such as volatile and non-volatile media, removable and non-removable media. By way of example, and not limitation, computer readable media may comprise computer readable storage media and communication media. Computer readable storage media may be implemented in any method or technology for storage of information such as computer readable instructions, data structures, program modules or other data. Examples of computer readable storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. A computer readable medium or media does not include propagated, modulated, or transitory signals.

Communication media typically embodies computer readable instructions, data structures, program modules or other data in a propagated, modulated or transitory data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as RF and other wireless media. Combinations of any of the above are also included within the scope of computer readable media.

In alternative embodiments, some or all of the software can be replaced by dedicated hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), special purpose computers, etc. In one embodiment, software (stored on a storage device) implementing one or more embodiments is used to program one or more processors. The one or more processors can be in communication with one or more computer readable media/ storage devices, peripherals and/or communication interfaces.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

The disclosure has been described in conjunction with various embodiments. However, other variations and modifications to the disclosed embodiments can be understood and effected from a study of the drawings, the disclosure, and the appended claims, and such variations and modifications are to be interpreted as being encompassed by the appended claims. In the claims, the word "comprising" does not exclude other elements or steps, and the indefinite article "a" or "an" does not exclude a plurality.

For purposes of this document, it should be noted that the dimensions of the various features depicted in the figures may not necessarily be drawn to scale.

For purposes of this document, reference in the specification to "an embodiment," "one embodiment," "some embodiments," or "another embodiment" may be used to describe different embodiments or the same embodiment.

For purposes of this document, a connection may be a direct connection or an indirect connection (e.g., via one or more other parts). In some cases, when an element is referred to as being connected or coupled to another element, the element may be directly connected to the other element or indirectly connected to the other element via intervening elements. When an element is referred to as being directly connected to another element, then there are no intervening elements between the element and the other element. Two devices are "in communication" if they are directly or indirectly connected so that they can communicate electronic signals between them.

For purposes of this document, the term "based on" may be read as "based at least in part on."

For purposes of this document, without additional context, use of numerical terms such as a "first" object, a "second" object, and a "third" object may not imply an ordering of objects, but may instead be used for identification purposes to identify different objects.

## Claims

1. A method comprising:
obtaining (302), from one or more sensors, current data for a driver of a vehicle and current data for each of one or more passengers of the vehicle that are drivers;
obtaining (304), from one or more data stores, historical data for the driver of the vehicle and historical data for each of the one or more passengers of the vehicle that are drivers;
analyzing (312) the current data and the historical data for the driver of the vehicle and the current data and the historical data for each of the one or more passengers of the vehicle that are drivers, wherein the analyzing thereby identifies a preferred candidate to drive the vehicle, the analyzing being performed using one or more computer implemented models;
outputting (314) a recommendation that the preferred candidate drive the vehicle,
obtaining (316) feedback data indicative of whether the recommendation was followed;
updating (318) at least one of the one or more computer implemented models based on the feedback data,
wherein if the feedback data indicates that the recommendation was not followed, the method further comprises:
presenting one or more questions to the driver and the preferred candidate;
receiving feedback regarding why the recommendation was not followed; and
updating the historical data for the driver and historical data for the preferred candidate based on the feedback regarding why the recommendation was not followed,
wherein the current data for the driver of the vehicle comprises one or more of the following:
current image data;
current video data;
current audio data;
current heart rate data;
current body temperature data; or
current driving speed data,
wherein the current data for each of the one or more passengers of the vehicle that are drivers comprises one or more of the following:
current image data;
current video data;
current audio data;
current heart rate data; and
current body temperature data.

2. The method of claim 1, wherein the historical data for the driver of the vehicle and for each of the one or more passengers of the vehicle that are drivers comprises one or more of the following:
driving license type data;
historical driving period data; or
historical rest period data.

3. The method of any one of claims 1 through 2, wherein the analyzing the current data and the historical data for the driver of the vehicle and the current data and the historical data for each of the one or more passengers of the vehicle that are drivers, includes quantifying one or more of the following for the driver and for each of the one or more passengers of the vehicle that are drivers:
a mental state;
an emotional state;
a fatigue state; or
an alertness state.

4. A system comprising:
one or more sensor interfaces (105) configured to obtain, from one or more sensors, current data for a driver of a vehicle and current data for each of one or more passengers of the vehicle that are drivers;
one or more data store interfaces configured to obtain, from one or more data stores (140), historical data for the driver of the vehicle and historical data for each of the one or more passengers of the vehicle that are drivers;
wherein the one or more processors are configured to:
analyze the current data and the historical data for the driver of the vehicle and the current data and the historical data for each of the one or more passengers of the vehicle that are drivers to thereby identify a preferred candidate to drive the vehicle, the analyzing being performed by one or more computer implemented models implemented by the one or more processors; and
output a recommendation that the preferred candidate drive the vehicle, wherein the one or more processors is/are further configured to:
obtain feedback data indicative of whether the recommendation was followed;
update at least one of the one or more computer implemented models based on the feedback data,
wherein if the if the feedback data indicates that the recommendation was not followed, the one or more processors is/are further configured to:
present one or more questions to the driver and the preferred candidate;
receive feedback regarding why the recommendation was not followed; and
based on the feedback regarding why the recommendation was not followed, update the historical data for the driver and historical data for the preferred candidate,
wherein the current data for the driver of the vehicle comprises one or more of the following:
current image data;
current video data;
current audio data;
current heart rate data;
current body temperature data; or
current driving speed data,
wherein the current data for each of the one or more passengers of the vehicle that are drivers comprises one or more of the following:
current image data;
current video data;
current audio data;
current heart rate data; or
current body temperature data.

5. The system of claim 4, wherein the historical data for the driver of the vehicle and for each of the one or more passengers of the vehicle that are drivers comprises one or more of the following:
driving license type data;
historical driving period data; or
historical rest period data.

6. The system of any one of claims 4 through 5, wherein in order to analyze the current data and the historical data for the driver of the vehicle and the current data and the historical data for each of the one or more passengers of the vehicle that are drivers, the one or more processors are configured to quantify one or more of the following for the driver and for each of the one or more passengers of the vehicle that are drivers:
a mental state;
an emotional state;
a fatigue state; or
an alertness state.

7. The system of any one of claims 4 through 6, wherein:
the one or more sensors include one or more cameras configured to obtain current image data for the driver of the vehicle and current image data for each of the one or more passengers of the vehicle that are drivers;
the one or more data store interfaces configured to obtain, from one or more data stores, historical image data for the driver of the vehicle and historical image data for each of the one or more passengers of the vehicle that are drivers; and
one or more processors configured to
analyze the current image data and the historical image data for the driver of the vehicle and the current image data and the historical image data for each of the one or more passengers of the vehicle that are drivers to thereby identify a preferred candidate to drive the vehicle.

8. A computer-readable medium storing computer instructions that when executed by one or more processors cause the one or more processors to perform the method according to any one of claims 1 through 3.

## Patentansprüche

1. Verfahren, umfassend:
Erlangen (302) von aktuellen Daten für einen Fahrer eines Fahrzeugs und aktuellen Daten für jeden von einem oder mehreren Passagieren des Fahrzeugs, die Fahrer sind, von einem oder mehreren Sensoren;
Erlangen (304) von historischen Daten für den Fahrer des Fahrzeugs und historischen Daten für jeden des einen oder der mehreren Passagiere des Fahrzeugs, die Fahrer sind, von einem oder mehreren Datenspeichern;
Analysieren (312) der aktuellen Daten und der historischen Daten für den Fahrer des Fahrzeugs und der aktuellen Daten und der historischen Daten für jeden des einen oder der mehreren Passagiere des Fahrzeugs, die Fahrer sind, wobei das Analysieren dadurch einen bevorzugten Kandidaten zum Fahren des Fahrzeugs identifiziert, wobei das Analysieren unter Verwendung eines oder mehrerer computerimplementierter Modelle durchgeführt wird;
Ausgeben (314) einer Empfehlung, dass der bevorzugte Kandidat das Fahrzeug fährt,
Erlangen (316) von Rückmeldedaten, die angeben, ob die Empfehlung befolgt wurde;
Aktualisieren (318) mindestens eines des einen oder der mehreren computerimplementierten Modelle basierend auf den Rückmeldedaten,
wobei, wenn die Rückmeldedaten angeben, dass die Empfehlung nicht befolgt wurde, das Verfahren ferner Folgendes umfasst:
Präsentieren einer oder mehrerer Fragen an den Fahrer und den bevorzugten Kandidaten;
Empfangen einer Rückmeldung, warum die Empfehlung nicht befolgt wurde; und
Aktualisieren der historischen Daten für den Fahrer und der historischen Daten für den bevorzugten Kandidaten basierend auf der Rückmeldung, warum der Empfehlung nicht befolgt wurde, wobei die aktuellen Daten für den Fahrer des Fahrzeugs eines oder mehrere von Folgendem umfassen:
aktuelle Bilddaten;
aktuelle Videodaten;
aktuelle Audiodaten;
aktuelle Herzfrequenzdaten;
aktuelle Körpertemperaturdaten; oder
aktuelle Fahrgeschwindigkeitsdaten,
wobei die aktuellen Daten für jeden des einen oder der mehreren Passagiere des Fahrzeugs, die Fahrer sind, eines oder mehrere von Folgendem umfassen:
aktuelle Bilddaten;
aktuelle Videodaten;
aktuelle Audiodaten;
aktuelle Herzfrequenzdaten; und
aktuelle Körpertemperaturdaten.

2. Verfahren nach Anspruch 1, wobei die historischen Daten für den Fahrer des Fahrzeugs und für jeden des einen oder der mehreren Passagiere des Fahrzeugs, die Fahrer sind, eines oder mehrere von Folgendem umfassen:
Daten zum Führerscheintyp;
historischen Fahrzeitdaten; oder
historischen Ruhezeitdaten.

3. Verfahren nach einem der Ansprüche 1 bis 2, wobei das Analysieren der aktuellen Daten und der historischen Daten für den Fahrer des Fahrzeugs und der aktuellen Daten und der historischen Daten für jeden des einen oder der mehreren Passagiere des Fahrzeugs, die Fahrer sind, Quantifizieren eines oder mehrerer von Folgendem für den Fahrer und für jeden des einen oder der mehreren Passagiere des Fahrzeugs, die Fahrer sind, beinhaltet:
einem mentalen Zustand;
einem emotionalen Zustand;
einem Erschöpfungszustand; oder
einem Aufmerksamkeitszustand.

4. System, umfassend:
eine oder mehrere Sensorschnittstellen (105), die zum Erlangen aktueller Daten für einen Fahrer eines Fahrzeugs und aktueller Daten für jeden von einem oder mehreren Passagieren des Fahrzeugs, die Fahrer sind, von einem oder mehreren Sensoren konfiguriert sind;
eine oder mehrere Datenspeicherschnittstellen, die zum Erlangen historischer Daten für den Fahrer des Fahrzeugs und historischer Daten für jeden des einen oder der mehreren Passagiere des Fahrzeugs, die Fahrer sind, von einem oder mehreren Datenspeichern (140) konfiguriert sind;
wobei der eine oder die mehreren Prozessoren konfiguriert sind zum:
Analysieren der aktuellen Daten und der historischen Daten für den Fahrer des Fahrzeugs und der aktuellen Daten und der historischen Daten für jeden des einen oder der mehreren Passagiere des Fahrzeugs, die Fahrer sind, um dadurch einen bevorzugten Kandidaten für das Fahren des Fahrzeugs zu identifizieren, wobei das Analysieren durch ein oder mehrere computerimplementierte Modelle durchgeführt wird, die durch den einen oder die mehreren Prozessoren implementiert werden; und
Ausgeben einer Empfehlung, dass der bevorzugte Kandidat das Fahrzeug fährt, wobei der eine oder die mehreren Prozessoren ferner konfiguriert sind zum:
Erlangen von Rückmeldedaten, die angeben, ob die Empfehlung befolgt wurde;
Aktualisieren mindestens eines des einen oder der mehreren computerimplementierten Modelle basierend auf den Rückmeldedaten, wobei, wenn die Rückmeldedaten angeben, dass die Empfehlung nicht befolgt wurde, der ein oder die mehreren Prozessoren ferner konfiguriert sind zum:
Präsentieren einer oder mehrerer Fragen an den Fahrer und den bevorzugten Kandidaten;
Empfangen einer Rückmeldung, warum die Empfehlung nicht befolgt wurde; und
Aktualisieren der historischen Daten für den Fahrer und der historischen Daten für den bevorzugten Kandidaten basierend auf der Rückmeldung, warum der Empfehlung nicht befolgt wurde,
wobei die aktuellen Daten für den Fahrer des Fahrzeugs eines oder mehrere von Folgendem umfassen:
aktuelle Bilddaten;
aktuelle Videodaten;
aktuelle Audiodaten;
aktuelle Herzfrequenzdaten;
aktuelle Körpertemperaturdaten; oder
aktuelle Fahrgeschwindigkeitsdaten,
wobei die aktuellen Daten für jeden des einen oder der mehreren Passagiere des Fahrzeugs, die Fahrer sind, eines oder mehrere von Folgendem umfassen:
aktuelle Bilddaten;
aktuelle Videodaten;
aktuelle Audiodaten;
aktuelle Herzfrequenzdaten; oder
aktuelle Körpertemperaturdaten.

5. System nach Anspruch 4, wobei die historischen Daten für den Fahrer des Fahrzeugs und für jeden des einen oder der mehreren Passagiere des Fahrzeugs, die Fahrer sind, eines oder mehrere von Folgendem umfassen:
Daten zum Führerscheintyp;
historischen Fahrzeitdaten; oder
historischen Ruhezeitdaten.

6. System nach einem der Ansprüche 4 bis 5, wobei zum Analysieren der aktuellen Daten und der historischen Daten für den Fahrer des Fahrzeugs und der aktuellen Daten und der historischen Daten für jeden des einen oder der mehreren Passagiere des Fahrzeugs, die Fahrer sind, der eine oder die mehreren Prozessoren zum Quantifizieren eines oder mehrere von Folgendem für den Fahrer und für jeden des einen oder der mehreren Passagiere des Fahrzeugs, die Fahrer sind, konfiguriert sind:
einem mentalen Zustand;
einem emotionalen Zustand;
einem Erschöpfungszustand; oder
einem Aufmerksamkeitszustand.

7. System nach einem der Ansprüche 4 bis 6, wobei:
der eine oder die mehreren Sensoren eine oder mehrere Kameras beinhalten, die zum Erlangen aktueller Bilddaten für den Fahrer des Fahrzeugs und aktueller Bilddaten für jeden des einen oder der mehreren Passagiere des Fahrzeugs, die Fahrer sind, konfiguriert sind;
die eine oder die mehreren Datenspeicherschnittstellen zum Erlangen historischer Bilddaten für den Fahrer des Fahrzeugs und historischer Bilddaten für jeden des einen oder der mehreren Passagiere des Fahrzeugs, die Fahrer sind, von einem oder mehreren Datenspeichern konfiguriert sind; und
ein oder mehrere Prozessoren konfiguriert sind zum Analysieren der aktuellen Bilddaten und der historischen Bilddaten für den Fahrer des Fahrzeugs und der aktuellen Bilddaten und der historischen Bilddaten für jeden des einen oder der mehreren Passagiere des Fahrzeugs, die Fahrer sind, um dadurch einen bevorzugten Kandidaten für das Fahren des Fahrzeugs zu identifizieren.

8. Computerlesbares Medium, das Computeranweisungen speichert, die, wenn sie durch einen oder mehrere Prozessoren ausgeführt werden, den einen oder die mehreren Prozessoren veranlassen, das Verfahren nach einem der Ansprüche 1 bis 3 durchzuführen.

## Revendications

1. Procédé comprenant :
l'obtention (302), à partir d'un ou plusieurs capteurs, de données actuelles concernant un conducteur d'un véhicule et de données actuelles concernant chacun d'un ou plusieurs passagers du véhicule qui sont conducteurs ;
l'obtention (304), à partir d'un ou plusieurs magasins de données, de données historiques concernant le conducteur du véhicule et de données historiques concernant chacun des un ou plusieurs passagers du véhicule qui sont conducteurs ;
l'analyse (312) des données actuelles et des données historiques concernant le conducteur du véhicule et des données actuelles et des données historiques concernant chacun des un ou plusieurs passagers du véhicule qui sont conducteurs, dans lequel l'analyse identifie ainsi un candidat préféré pour conduire le véhicule, l'analyse étant réalisée à l'aide d'un ou plusieurs modèles mis en œuvre par ordinateur ;
la génération (314) d'une recommandation selon laquelle le candidat préféré conduirait le véhicule,
l'obtention (316) de données de rétroaction indicatives du fait que la recommandation a été suivie ;
la mise à jour (318) d'au moins l'un des un ou plusieurs modèles mis en œuvre par ordinateur sur la base des données de rétroaction,
dans lequel si les données de rétroaction indiquent que la recommandation n'a pas été suivie, le procédé comprend également :
la présentation d'une ou plusieurs questions au conducteur et au candidat préféré ;
la réception de rétroactions expliquant pourquoi la recommandation n'a pas été suivie ; et
la mise à jour des données historiques concernant le conducteur et de données historiques concernant le candidat préféré sur la base des rétroactions expliquant pourquoi la recommandation n'a pas été suivie,
dans lequel les données actuelles concernant le conducteur du véhicule comprennent l'une ou plusieurs des données suivantes :
des données d'image actuelles ;
des données vidéo actuelles ;
des données audio actuelles ;
des données actuelles sur la fréquence cardiaque ;
des données actuelles sur la température corporelle ; ou
des données actuelles sur la vitesse de conduite,
dans lequel les données actuelles concernant chacun des un ou
plusieurs passagers du véhicule qui sont conducteurs comprennent l'une ou plusieurs des données suivantes :
des données d'image actuelles ;
des données vidéo actuelles ;
des données audio actuelles ;
des données actuelles sur la fréquence cardiaque ; et
des données actuelles sur la température corporelle.

2. Procédé selon la revendication 1, dans lequel les données historiques concernant le conducteur du véhicule et concernant chacun des un ou plusieurs passagers du véhicule qui sont conducteurs comprennent l'une ou plusieurs des données suivantes :
des données concernant le type de permis de conduire ;
des données historiques sur la période de conduite ; ou
des données historiques sur la période de repos.

3. Procédé selon l'une quelconque des revendications 1 et 2, dans lequel l'analyse des données actuelles et des données historiques concernant le conducteur du véhicule et des données actuelles et des données historiques concernant chacun des un ou plusieurs passagers du véhicule qui sont conducteurs, comporte la quantification de l'un ou plusieurs des états suivants pour le conducteur et pour chacun des un ou plusieurs passagers du véhicule qui sont conducteurs :
un état mental ;
un état émotionnel ;
un état de fatigue ; ou
un état de vigilance.

4. Système comprenant :
une ou plusieurs interfaces de capteurs (105) configurées pour obtenir, à partir d'un ou plusieurs capteurs, des données actuelles concernant un conducteur d'un véhicule et des données actuelles concernant chacun d'un ou plusieurs passagers du véhicule qui sont conducteurs ;
une ou plusieurs interfaces de magasin de données configurées pour obtenir, à partir d'un ou plusieurs magasins de données (140), des données historiques concernant le conducteur du véhicule et des données historiques concernant chacun des un ou plusieurs passagers du véhicule qui sont conducteurs ;
dans lequel les un ou plusieurs processeurs sont configurés pour :
analyser les données actuelles et les données historiques concernant le conducteur du véhicule et les données actuelles et les données historiques concernant chacun des un ou plusieurs passagers du véhicule qui sont conducteurs pour ainsi identifier un candidat préféré pour conduire le véhicule, l'analyse étant réalisée par un ou plusieurs modèles mis en œuvre par ordinateur par les un ou plusieurs processeurs ; et
générer une recommandation selon laquelle le candidat préféré conduirait le véhicule, dans lequel les un ou plusieurs processeurs sont également configurés pour :
obtenir des données de rétroaction indicatives du fait que la recommandation a été suivie ;
mettre à jour au moins l'un des un ou plusieurs modèles mis en œuvre par ordinateur sur la base des données de rétroaction,
dans lequel si les si les données de rétroaction indiquent que la recommandation n'a pas été suivie, les un ou plusieurs processeurs sont configurés pour :
présenter une ou plusieurs questions au conducteur et au candidat préféré ;
recevoir des rétroactions expliquant pourquoi la recommandation n'a pas été suivie ; et
sur la base des rétroactions expliquant pourquoi la recommandation n'a pas été suivie, mettre à jour les données historiques concernant le conducteur et des données historiques concernant le candidat préféré,
dans lequel les données actuelles concernant le conducteur du véhicule comprennent l'une ou plusieurs des données suivantes :
des données d'image actuelles ;
des données vidéo actuelles ;
des données audio actuelles ;
des données actuelles sur la fréquence cardiaque ;
des données actuelles sur la température corporelle ; ou
des données actuelles sur la vitesse de conduite,
dans lequel les données actuelles concernant chacun des un ou
plusieurs passagers du véhicule qui sont conducteurs comprennent l'une ou plusieurs des données suivantes :
des données d'image actuelles ;
des données vidéo actuelles ;
des données audio actuelles ;
des données actuelles sur la fréquence cardiaque ; ou
des données actuelles sur la température corporelle.

5. Système selon la revendication 4, dans lequel les données historiques concernant le conducteur du véhicule et concernant chacun des un ou plusieurs passagers du véhicule qui sont conducteurs comprennent l'une ou plusieurs des données suivantes :
des données concernant le type de permis de conduire ;
des données historiques sur la période de conduite ; ou
des données historiques sur la période de repos.

6. Système selon l'une quelconque des revendications 4 et 5, dans lequel afin d'analyser les données actuelles et les données historiques concernant le conducteur du véhicule et les données actuelles et les données historiques concernant chacun des un ou plusieurs passagers du véhicule qui sont conducteurs, les un ou plusieurs processeurs sont configurés pour quantifier l'un ou plusieurs des états suivants concernant le conducteur et concernant chacun des un ou plusieurs passagers du véhicule qui sont conducteurs :
un état mental ;
un état émotionnel ;
un état de fatigue ; ou
un état de vigilance.

7. Système selon l'une quelconque des revendications 4 à 6, dans lequel :
les un ou plusieurs capteurs comportent une ou plusieurs caméras configurées pour obtenir des données d'image actuelles concernant le conducteur du véhicule et des données d'image actuelles concernant chacun des un ou plusieurs passagers du véhicule qui sont conducteurs ;
les une ou plusieurs interfaces de magasin de données configurées pour obtenir, à partir d'un ou plusieurs magasins de données, des données historiques concernant le conducteur du véhicule et des données historiques concernant chacun des un ou plusieurs passagers du véhicule qui sont conducteurs ; et
un ou plusieurs processeurs configurés pour
analyser les données d'image actuelles et les données d'image historiques concernant le conducteur du véhicule et les données d'image actuelles et les données d'image historiques concernant chacun des un ou plusieurs passagers du véhicule pour ainsi identifier un candidat préféré pour conduire le véhicule.

8. Support lisible par ordinateur stockant des instructions informatiques qui, lorsqu'elles sont exécutées par un ou plusieurs processeurs, amènent les un ou plusieurs processeurs à réaliser le procédé selon l'une quelconque des revendications 1 à 3.
